# EUROPÄISCHE PATENTSCHRIFT

(11) **EP 2 788 177 B1**
(45) Veröffentlichungstag und Bekanntmachung des Hinweises auf die Patenterteilung: **10.11.2021**
(21) Anmeldenummer: 12823138.8
(22) Anmeldetag: 05.12.2012
(51) Int. Cl.: B29C 70/46, B60B 5/02, B60B 3/04

(54) **RADFELGE MIT EINEM FELGENBETT AUS FASERVERBUNDWERKSTOFF UND VERFAHREN ZUR HERSTELLUNG**
WHEEL RIM HAVING A RIM BASE MADE OF FIBER REINFORCED MATERIAL AND METHOD OF PRODUCTION
JANTE DE ROUE POURVUE D'UN FOND DE JANTE EN MATÉRIAU COMPOSITE RENFORCÉ PAR DES FIBRES ET PROCÉDÉ DE FABRICATION DE LADITE JANTE

(30) Priorität: 07.12.2011 DE 102011120361
(43) Veröffentlichungstag der Anmeldung: 15.10.2014
(73) Patentinhaber: ThyssenKrupp Carbon Components GmbH, 01723 Wilsdruff STT Kesselsdorf (DE)
(72) Erfinder: HUFENBACH, Werner, 01324 Dresden (DE); LEPPER, Martin, 01279 Dresden (DE); WERNER, Jens, 01640 Coswig (DE); KÖHLER, Christian, 01099 Dresden (DE)
(86) Internationale Anmeldenummer: PCT/DE2012/100370
(87) Internationale Veröffentlichungsnummer: WO 2013/083123

(56) Entgegenhaltungen:
- EP-A1- 2 363 272
- WO-A1-02/20252
- DE-A1- 3 119 500
- DE-A1-102010 010 513
- JP-U- S5 527 112

## Beschreibung

Die Erfindung betrifft eine Radfelge mit einem Felgenbett aus Faserverbundwerkstoff und einer Radscheibe, wobei die Radscheibe an ihrem radialen Randbereich mit dem Felgenbett verbunden ist.

Die Erfindung betrifft außerdem ein Verfahren zur Herstellung einer Radfelge.

Radfelgen bestehen insbesondere im Kraftfahrzeugbereich aufgrund der Leichtbauanforderungen zumindest teilweise aus Faserbundwerkstoff. Die Bauteile der Radfelge, wie das Felgenbett und die Radscheibe, werden in Einzelteilen entsprechend der spezifischen Anforderungen aus verschiedenen Materialien vorgefertigt und anschließend zusammengefügt. Dabei sind die Einzelteile an speziell ausgebildeten Fügezonen miteinander verbunden, wobei die Verbindungsstelle erheblichen Belastungen standhalten muss.

Aus der Druckschrift DE 10 2010 010 512 A1 sind Verbindungen eines Felgenbettes aus Faserverbundwerkstoff mit einer Radscheibe bekannt, bei denen die Verbindungsstellen vorteilhafter Weise durch formschlüssige Hinterschneidungen der Kontur des Felgenbettes mit der Kontur des radialen Randbereichs der Radscheibe gebildet sind. Bei dem aus der o. g. Druckschrift bekannten Verfahren zur Herstellung des Bauteils aus zum Teil Faserverbundwerkstoff wird eine Preform des Felgenbetts aus Fasermaterial vor der Konsolidierung mit der Radscheibe verbunden.

Die speziell für die Verbindung geformten Randbereiche der Radscheibe sind zum Teil aufwendig zu fertigen oder sind vor dem Faserablageprozess zur Vorfertigung der Preform des Felgenbetts mit besonderem Aufwand zu drapieren, um es an das Formwerkzeug anzulegen.

Es hat sich zudem herausgestellt, dass an den bisher bekannten Hinterschnittverbindungen von Felgenbett und Radscheibe zusätzlicher Aufwand erforderlich ist, um bei der anschließenden Konsolidierung der Preform der Radfelge einen ausreichenden Stoffschluss des Felgenbetts mit der Radscheibe zu erreichen.

Es ist daher Aufgabe der Erfindung, die Verbindung zwischen Felgenbett und Radscheibe bei einer Radfelge der eingangs genannten Art zu verbessern und ein Verfahren für die Herstellung einer Radfelge mit einer verbesserten Verbindung zwischen Felgenbett und Radscheibe bereitzustellen.

Die Aufgabe wird durch eine Radfelge mit den Merkmalen des Patentanspruches 1 gelöst. Es wird erfindungsgemäß vorgeschlagen, dass der radiale Randbereich der Radscheibe wenigstens zwei aufgespreizt angeordnete Teillagen aufweist, an denen jeweils eine im Wesentlichen axial erstreckte, konturierte Fügezone ausgebildet ist, die flächig mit dem Felgenbett verbunden ist. Bei dieser Lösung hat die Radscheibe in ihrem Randbereich zwei oder mehrere Teillagen, die fächerartig aufgeklappt eine ausgeprägte flächige Aufweitung als Fügezone ergeben. Solche Teillagen im Randbereich der Radscheibe können einfach hergestellt werden, beispielsweise durch Aufspleißen des äußeren Umfangs der Radscheibe. Alternativ kann am Randbereich der Radscheibe eine weitere Lage hinzugefügt werden, die am Ansatz mit dem Material der Radscheibe verklebt ist. Die Fügezonen der Teillagen können beliebig groß ausgeführt und folglich beliebig weit auseinandergespreizt werden.

Mit diesen aus den Teillagen gebildeten Fügezonen können große, insbesondere an die unebene Kontur des Felgenbettes angepasste Fügeflächen zu Verfügung gestellt werden. Die konturierten Fügezonen liefern auf einfache Weise einen großzügigen Flächenkontakt und neben einem radial gesicherten Formenschluss durch die umfassende Einbettung der Radscheibe in das Felgenbett auch in axialer Richtung einen durch die Konturierung ausgebildeten Formenschluss. Das Zusammenwirken dieser Eigenschaften verbessert die Haftung der Verbindung erheblich. Die konturiert anliegenden Fügeflächen gewährleisten bereits vor einer Konsolidierung des Faserverbundwerkstoffs des Felgenbetts einen wirksamen axialen und radialen Formschluss sowie einen Reibschluss zwischen der Radscheibe und der Preform des Felgenbettes. Bei der Konsolidierung des Felgenbetts sorgen die großflächigen Fügezonen für eine wirksame stoffschlüssige Verbindung zwischen Felgenbett und Radscheibe.

Durch die vorteilhafte Formgestaltung des Randbereiches, welche sich zwangsläufig am Ansatz der sich aufspreizend angeordneten Teillagen in Form eines Zwickelraumes herausbildet, wird eine besonders ausgeprägte Hinterschnittverbindung mit dem Felgenbett bzw. der Preform des Felgenbetts ermöglicht und damit ein noch wirksamer Formschluss zwischen der Radscheibe und dem Felgenbett auf einfache Weise gewährleistet.

Im Ergebnis wird mit einfachen Mitteln eine hochbeanspruchbare, form- und stoffschlüssige Verbindung der Radscheibe mit dem Felgenbett der Radfelge geschaffen.

Die Erfindung ist sowohl bei einer geschlossen flächigen Radscheibe als auch bei einer im Randbereich durchbrochen gestalteten Radscheibe anwendbar. Der Begriff der Radscheibe umfasst auch einen aus Radspeichen gebildeten Radstern, bei dem die Erfindung ebenfalls anwendbar ist.

Die Aufgabe wird auch durch eine Radfelge mit den Merkmalen des Patentanspruches 2 gelöst. Es wird hierbei vorgeschlagen, dass die Radscheibe, die an ihrem radialen Randbereich mit einem axial begrenztem Bereich des Felgenbetts verbunden ist, aus wenigstens zwei, bereichsweise aneinander liegend angeordneten Teillagen besteht, an denen im Randbereich jeweils eine im Wesentlichen axial erstreckte, konturierte Fügezone ausgebildet ist, welche flächig mit dem Felgenbett verbunden ist. Bei dieser Erfindungsgestaltung besteht die Radscheibe aus zwei oder mehrere Teillagen. Im Randbereich sind diese Teillagen fächerartig aufgeklappt und ergeben so eine ausgeprägte flächige Aufweitung als Fügezone. Auch mit den aus diesen Teillagen gebildeten Fügezonen können große und besonders gut formbare, an die unebene Kontur des Felgenbettes angepasste Fügeflächen zu Verfügung gestellt werden. Im Ergebnis werden die vorbeschriebenen Vorteile auch mit dieser Lösung erzielt, wobei die Herstellung der aufgefächerten Fügezonen noch leichter zu realisieren ist. Denn bei dieser Lösung wird die aus Teillagen gebildete Lagenstruktur der Radscheibe unmittelbar für die Ausbildung der Fügezonen genutzt, so dass gesonderte Arbeitsgänge zur Herstellung von speziellen Teillagen im Randbereich der Radscheibe entfallen können.

Die erfindungsgemäße Lagenstruktur der Radscheibe kann darüber hinaus eine höhere Festigkeit der Radscheibe gewährleisten.

Die Lagenstruktur der Radscheibe bietet vorteilhafte Kombinationsmöglichkeiten, z.B. hinsichtlich Materialeigenschaften, Dicke, Verlauf und Verbindungen der einzelnen Teillagen, mit denen die Radscheibe selbst wie die Verbindung der Radscheibe mit dem Felgenbett an die jeweiligen Einsatzbedingungen der Radfelge angepasst werden können. So können an der Verbindungsnaht mit dem Felgenbett bzw. mit der Preform des Felgenbetts in Größe und Dicke differenzierte Auflage- und Fügeflächen entsprechend der jeweiligen Anforderungen an den Belastungsgrad der Radfelge zur Verfügung gestellt werden.

In einer vorteilhaften Ausführungsform sind die Teillagen zumindest abschnittsweise miteinander stoffschlüssig verbunden.

Das erleichtert zum einen den technologischen Ablauf der Vorfertigung der Radscheibe und der mit der Radscheibe zusammengesetzten Preform des Felgenbettes. Zum anderen sorgt die lagenweise stoffschlüssige Verbindung der Teillagen für eine verbesserte Festigkeit der Radscheibe selbst.

Weitere Vorteile ergeben sich, wenn die Fügezone der Teillage in Umfangsrichtung der Radscheibe unterbrochen ausgebildet ist. Hierdurch werden zusätzlich tangential gerichtete Hinterschneidungen zwischen den Fügezonen und der anliegenden Kontur des Felgenbettes bzw. der Preform des Felgenbetts ermöglicht, wodurch ein weiterer vorteilhafter Formschluss des Randbereiches der Radscheibe mit dem Felgenbett gewährleistet werden kann.

In einer besonders bevorzugten Ausführungsform ist zwischen den Fügezonen zweier Teillagen ein profilierter Stützkern angeordnet. Der Stützkern wird insbesondere in dem sich bildenden Zwickelraum der auseinander gespreizten Teillagen eingelegt. Der Stützkern fixiert die gespreizten Fügezonen während der Vorfertigung der Preform des Felgenbettes und der Verbindung der Fügezonen mit dem Felgenbett. Die Lagefixierung der Fügezonen der Teillagen mittels des Stützkernes verhindert eine Verschiebung und Knickbildung beim Anformen der Teillagen an das Formwerkzeug sowie beim Ablageprozess des Fasermaterials der Preform des Felgenbetts auf den Teillagen.

Außerdem verbessert der Stützkern die Festigkeit der fertiggestellten Hinterschnittverbindung zwischen der Radscheibe und dem Felgenbett.

Eine an den sich bildenden Zwickelraum angepasste Form des Stützkernes erhöht diese vorbeschriebenen vorteilhaften Wirkungen.

Der profilierte Stützkern kann aus beliebigem festem Material bestehen, wobei sich PU-Hartschaum oder ein anderer harter Kunststoff, sowie Metall oder Keramik besonders eignet.

Gemäß einer Ausführungsform der Erfindung kann vorgesehen sein, dass zumindest eine Teillage der Radscheibe aus Faserverbundwerkstoff, Stahlblech oder Aluminiumblech besteht.

Werden Teillagen aus verschiedenem Material vorgesehen, können funktionale und gestalterische Effekte bedarfsgerecht miteinander kombiniert werden. So kann mit einer metallischen Teillage, wie z.B. aus Aluminiumblech oder Stahlblech, eine Schutzschicht der Radscheibe bereitgestellt werden, die eine benachbarte Teillage, welche aus Leichtbaugründen beispielsweise aus Faserverbundwerkstoff besteht, vor thermischen oder mechanischen Einwirkungen schützt. Auch besondere Design-Anforderungen an die Radscheibe lassen sich mit entsprechender Materialauswahl realisieren. Die Verwendung von Faserverbundwerkstoff für die Teillage ermöglicht es außerdem, entsprechend der differenzierten mechanischen und thermischen Belastungen der Radscheibe örtlich angepasste Verstärkungsstrukturen, aus z.B. Glasfasern oder hochfeste Kohlenstofffasern, beispielsweise im Randbereich vorzusehen.

Vorteilhafter Weise kann eine Teillage aus Faserverbundwerkstoff aus mehreren Textilfaserlagen gebildet sein, wodurch eine besonders hohe Kraftübertragung in Faserrichtung bei zugleich geringem Gewicht gewährleistet werden kann.

Die Aufgabe wird außerdem durch ein Verfahren zur Herstellung der erfindungsgemäßen Radfelge mit den Merkmalen des Patentanspruches 8 gelöst. Bei dem erfindungsgemäßen Verfahren wird bzw. werden in einer Vorfertigungsphase zur Erzeugung einer Preform des Felgenbetts durch Ablage von Fasermaterial auf einem das Felgenbett abbildenden Formwerkzeug
- die Radscheibe bzw. die Teillagen der Radscheibe zwischen zwei Teilwerkzeugen des Formwerkzeuges angeordnet, und
- die über die Teilwerkzeuge überragenden Abschnitte der Teillagen an die Teilwerkzeuge angeformt, wobei die angeformten Abschnitte der Teillagen im Wesentlichen axial erstreckte, konturierte Fügezonen bilden,
- welche durch anschließende Ablage des Fasermaterials formschlüssig an der Preform des Felgenbettes fixiert werden.

Im Bereich zwischen den Teilwerkzeugen des Formwerkzeuges werden die Teillagen der Radscheibe fixiert und aneinandergefügt, während im radialen Randbereich der Radscheibe die überstehenden Teillagen gegensinnig aufgespreizt und als Fügezonen beidseitig an der Kontur der einschließenden Teilwerkzeuge angelegt werden. Die Teilwerkzeuge bilden die künftige Form des Felgenbettes ab. In dieser Weise können die Fügezonen der Teillagen der Radscheibe in gewünschte Position und Ausformung in Bezug zum Felgenbett vorbereitet werden, bevor der Faserablageprozess auf dem Formwerkzeug zur Vorfertigung der Preform des Felgenbetts erfolgt. Es werden sodann mit der Faserablage Nahtstellen mit großflächigen, konturierten Hinterschneidungen an den Kontaktflächen zwischen der Radscheibe und der Preform des Felgenbettes geschaffen, die die Haftung der Verbindung erheblich verbessern. Die Ausführung gewährleistet bereits vor der anschließenden Konsolidierung einen wirksamen Form- und Reibschluss zwischen der Radscheibe und der Preform des Felgenbettes.

Zwischen den an den Teilwerkzeugen angeformten Fügezonen zweier Teillagen bildet sich zwangsläufig ein Zwickelraum aus, so dass sich beim Faserablageprozess eine besonders ausgeprägte Hinterschneidungsverbindung des Fasermaterials des Felgenbettes bzw. der Preform des Felgenbetts mit der Radscheibe von selbst ergibt. Neben der wirkungsvollen reibschlüssigen Flächenhaftung der Fügezonen an der Preform des Felgenbetts wird eine sichere formschlüssige Fixierung der Radscheibe erreicht, die eine Weiterverarbeitung der zusammengesetzten Preform vereinfacht. Mit der Konsolidierung der Preform wird eine besonders wirksame, kombinierte form- und stoffschlüssige Verbindung der Radscheibe mit dem Felgenbett erzeugt.

Wird vor dem Faserablageprozess zur Faserablage auf dem Formwerkzeug in einem Zwickelraum zwischen den an die Teilwerkzeuge angeformten Teillagen ein profilierter Stützkern eingelegt, werden die Fügezonen besonders gut in ihrer Lage auf den Teilwerkzeugen fixiert. Der eingelegte Stützkern verhindert die Bildung von Falten und Knicken beim Anformen der Teillagen an das Formwerkzeug sowie beim nachfolgenden Ablageprozess des Fasermaterials.

Bei einer bevorzugten Ausführungsweise wird die Radscheibe oder wenigstens eine Teillage der Radscheibe als Preformling aus Fasermaterial vorgefertigt und ein solcher Preformling zwischen den Teilwerkzeugen des Formwerkzeuges angeordnet. Bei dieser Ausführungsform ist die Radscheibe bzw. die Teillage der Radscheibe, analog der Preform des Felgenbettes nach erfolgtem Faserablageprozess auf dem Formwerkzeug ein noch nicht konsolidiertes Halbzeug. Die Konsolidierung des Preformlings der Radscheibe bzw. der Teillage der Radscheibe kann somit gleichzeitig mit der Konsolidierung der Preform des Felgenbetts erfolgen.

Auch können unter fertigungstechnischen Einsparungen zugleich die Teillagen der Radscheiben untereinander als auch die Teillagen mit dem Felgenbett stoffschlüssig verbunden werden.

Bei einer Radscheibe mit im Randbereich angesetzter Teillage kann eine als Preformling vorgefertigte Teillage in gewünschter Anordnung zur Radscheibe bzw. zum Preformling der Radscheibe zwischen den Teilwerkzeugen fixiert werden und während des Konsolidierungsprozesses am Fügeansatz mit der Radscheibe verklebt werden.

Diese und weitere aus den Patentansprüchen, der Beschreibung der Ausführungsbeispiele und den Zeichnungen hervorgehenden Merkmale können jeweils für sich oder in Kombination als vorteilhafte Ausführungsformen der Erfindung verwirklicht sein, für die hier Schutz beansprucht wird

Die erfindungsgemäße Radfelge und das Verfahren zu deren Herstellung werden nachfolgend an einem Ausführungsbeispiel näher erläutert. Die zugehörigen Zeichnungen zeigen in schematischen Darstellung in
- Fig. 1: Schnittansicht einer Radfelge mit einem Felgenbett und einer Radscheibe mit einem zweiteiligen Randbereich,
- Fig. 2: Schnittansicht einer Radfelge mit einem Felgenbett und einer zweiteiligen Radscheibe,
- Fig. 3: Detailansicht X der Radfelge nach Fig. 2,
- Fig. 4: Schnittansicht einer Radfelge mit einem Felgenbett und einer fünfteiligen Radscheibe und
- Fig. 5: Detailansicht Y der Radfelge nach Fig. 4.

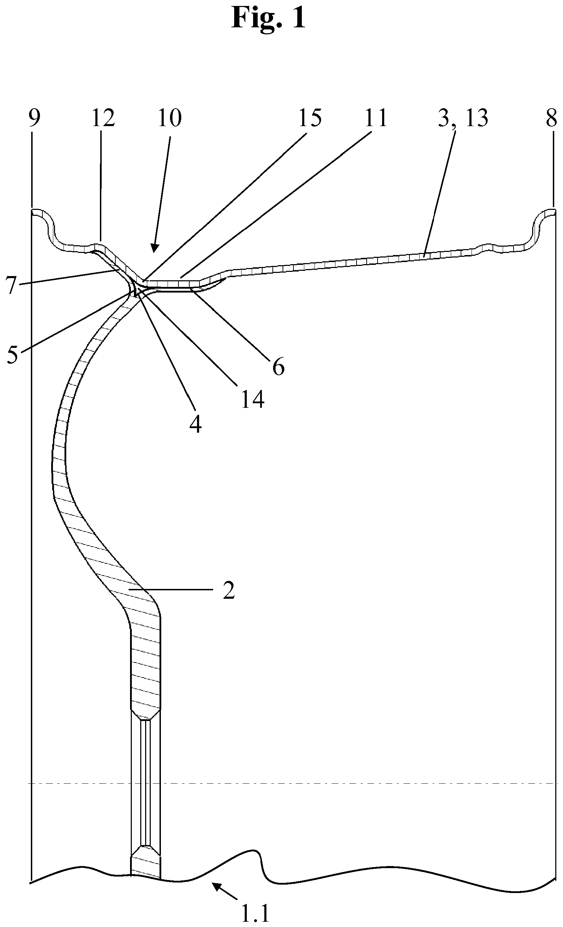

Fig. 1 zeigt eine erfindungsgemäße Radfelge 1.1 nach einem ersten Ausführungsbeispiel, bestehend aus einer geschlossenflächigen Radscheibe 2 aus Kohlenstofffaserverbundwerkstoff und einem Felgenbett 3 aus Kohlenstofffaserverbundwerkstoff. Die Radscheibe weist in ihrem umlaufenden Randbereich zwei Teillagen 4, 5 aus Kohlenstofffaserverbundwerkstoff auf. Die beiden Teillagen 4, 5 entstehen beispielsweise durch einen umlaufenden Längsschnitt im Kohlenstofffaserverbundwerkstoff entlang des Randbereiches der Radscheibe 2.

Diese Teillagen 4, 5 sind im Gegensatz zum hauptsächlich radial erstreckten Radscheibenkörper im Wesentlichen axial erstreckt und zueinander gegensinnig aufgespreizt angeordnet. Sie verfügen über jeweils eine Fügezone 6, 7, die der Kontur des Felgenbettes der Radfelge folgend am Felgenbett 3 anliegt und mit diesem verbunden ist. Die Fügezone 6 der inneren Teillage 4 erstreckt sich in Richtung eines inneren Felgenhorns 8 des Felgenbettes 3, wogegen sich die Fügezone 7 der äußeren Teillage 5 in Richtung eines äußeren Felgenhorns 9 des Felgenbettes 3 erstreckt. Die Fügezonen 6, 7 der Teillagen 4, 5 liegen mit ihren ausgeprägten Kontaktflächen vollflächig und konturengetreu an der Kontur des Felgenbettes 3 an. Die Fügezonen 6, 7 sind mit dem Felgenbett 3 entlang eine umlaufenen Verbindungsnaht 10 miteinander verbunden. Die Verbindungsnaht 10 ist in einem Bereich des Felgenbetts ausgebildet, in dem die Kontur des Felgenbetts besonders profiliert ausgeprägt ist. Die Verbindungsnaht 10 befindet sich im Bereich eines einschnürend geformten Tiefbettes 11, an welches sich in Richtung eines äußeren Felgenhorns 9 ein ausgeformtes Hump 12 und in Richtung eines inneren Felgenhorns 8 ein Flachbett 13 des Felgenbetts 3 anschließt.

In einem sich zwischen den aufgespreizten Teillagen 4, 5 der Radscheibe 2 ergebenden Zwickelraum 14 formt sich das Tiefbett 11 zusätzlich durch einer Sicke 15 ein. Der axiale Querschnittsverlauf der umlaufenden Verbindungsnaht 10 entlang des Felgenbetts 3 vom Hump 12 über das Tiefbett 11 mit der Sicke 15 bis zum Flachbett 13 schafft eine Hinterschnittverbindung mit axialem und radialem Formschluss zwischen der Radscheibe 2 und dem Felgenbett 3. Die Fügezonen 6, 7 der Teillagen 4, 5 sind darüber hinaus stoffschlüssig, z. B. durch Verkleben, mit dem Felgenbett 3 verbunden.

Das erfindungsgemäße Verfahren zur Herstellung der Radfelge 1.1 insbesondere der Verbindung zwischen dem Felgenbett 3 und der Radscheibe 2 kann während der Herstellung einer Preform des Felgenbetts 3 durch Faserablage auf einem das Felgenbett 3 abbildenden Formwerkzeug (hier nicht dargestellt) erfolgen. Dazu wird die Radscheibe 2 zwischen zwei Teilwerkzeuge des Formwerkzeuges angeordnet, wobei der Randbereich mit den beiden Teillagen 4, 5 über das Formwerkzeug übersteht. Die Teillagen 4, 5 werden beidseitig des Formwerkzeuges flach an jeweils ein Teilwerkzeug angeformt, so dass sich zwischen den aufgespreizten Teillagen 4, 5 der Zwickelraum 14 bildet und die Fügezonen 6, 7 einen nahezu übergangslosen Anschluss an die Teilwerkzeugen bilden. Im Anschluss daran wird zur Herstellung der Preform des Felgenbettes 3 das Fasermaterial auf den Formwerkzeug und auf dem Zwickelraum 14 und den konturierten Fügezonen 6, 7 der Teillagen 4, 5 abgelegt.

Während dieses Faserablageprozesses zur Herstellung der Preform des Felgenbettes 3 wird an der Verbindungsnaht 10 durch die Form des Zwickelraums 14 und der konturierten Fügezonen 6, 7 eine großflächige Hinterschnittverbindung mit axial als auch radial gesicherten Formenschluss zwischen der Radscheibe 2 und der Preform des Felgenbetts 3 aus Fasermaterial ausgebildet.

Dieser Formschluss wird durch einen hohen Reibschluss der großflächigen Kontaktflächen zwischen den Fügezonen 6, 7 der Radscheibe 2 und der Kontur der Preform des Felgenbettes 3 unterstützt. Hierdurch wird bereits in diesem Fertigungsstadium eine vorfixierte Verbindungsnaht 10 der Radscheibe 2 mit der Preform des Felgenbetts 3 zur optimalen Weiterverarbeitung geschaffen.

Bei dem nachfolgenden Konsolidierungsvorgang zur Konsolidierung der Preform des Felgenbetts 3, beispielsweise durch Harzinjektion, werden zugleich die Radscheibe 2 und das Felgenbett 3 im Auflagebereich des Fasermaterials der Preform (Zwickelraum 14 und konturierte Fügezonen 6, 7) miteinander verschmolzen und/oder verharzt. So wird während dieses Konsolidierungsprozesses der in der Vorfertigungsphase zur Bildung der Preform begonnene Fügevorgang zur Verbindung der Radscheibe 2 mit dem Felgenbett 3 vollendet. Beide Vorgänge werden fertigungstechnisch günstig in einem Fertigungsvorgang absolviert.

In einer alternativen Ausführung des ersten Ausführungsbeispiels wird die vorbeschriebene Radscheibe 2 als ein vorgefertigtes Halbzeug bzw. Preformling aus Fasermaterial mit dem Felgenbett 3 verbunden.

Die Radscheibe 2 wird als Preformling zwischen den Teilwerkzeugen des Formwerkzeuges angeordnet. Die durch teilweises Aufspleißen des äußeren Randes des Preformlings der Radscheibe 2 gebildeten Teillagen 4, 5 sind leichter formbar und können noch besser an das Formwerkzeug angeformt werden. Bei der Konsolidierung der Radscheibe 2 kann auch der Ansatz der aufgesplissenen Teillagen 4, 5 fest gefügt werden. Insbesondere kann die Konsolidierung des Preformlings der Radscheibe 2 gleichzeitig mit dem Konsolidierungsprozess der Preform des Felgenbettes 3 erfolgen, wobei ein weiterer Fertigungsschritt zur Herstellung der erfindungsgemäßen Radfelge 1.1 entfallen kann.

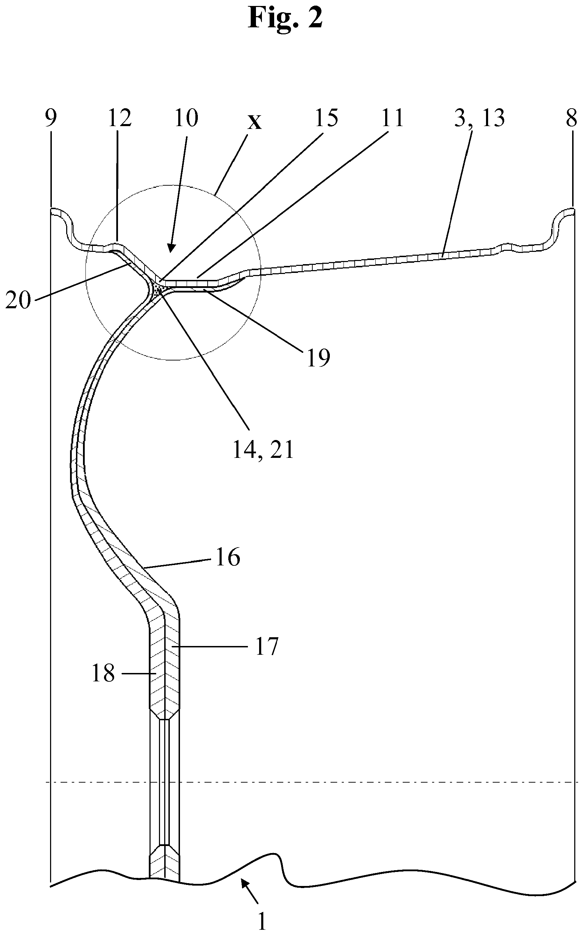

Fig. 2 zeigt eine erfindungsgemäße Radfelge 1.2 nach einem zweiten Ausführungsbeispiel, bestehend aus einer zweiteiligen Radscheibe 16 und einem Felgenbett 3.

Gleiche Funktionselemente sind mit identischen Bezugszeichen gekennzeichnet. Nachfolgend soll im Wesentlichen nur auf die Unterschiede gegenüber der Radfelge 1.1 nach dem ersten Ausführungsbeispiel eingegangen werden. Auch hinsichtlich der Erläuterung der erfindungsgemäßen Verfahrensschritte und Funktionsmerkmale wird auf die vorstehende Beschreibung zum ersten Ausführungsbeispiel verwiesen.

Als eine Besonderheit dieses Ausführungsbeispiels ist die Radscheibe 16 zweiteilig ausgebildet und besteht aus zwei aneinander gefügten Teillagen 17, 18. Die Teillagen 17, 18 sind im Randbereich der Radscheibe 16 axial gerichtet und gegensinnig gespreizt und weisen jeweils eine Fügezone 19, 20 auf, die wie im Ausführungsbeispiel nach in Fig. 1 vollflächig an der Kontur des Felgenbettes 3 der Radfelge 1.2 anliegen.

Das Felgenbett 3 besteht aus Kohlenstofffaserverbundwerkstoff. Die innere Teillage 17 und die äußere Teillage 18 der Radscheibe 16 bestehen ebenfalls aus Kohlenstofffaserverbundwerkstoff.

Die Fügezonen 19, 20 der Teillagen 17, 18 sind im Bereich des Tiefbettes 11 im Übergang zum Hump 12 und zum Flachbett 13 mit dem Felgenbett 3 verbunden. Die am Felgenbett 3 anliegende Fügezone 19 der inneren Teillage 17 erstreckt sich in Richtung des inneren Felgenhorns 8, wogegen sich die am Felgenbett 3 anliegende Fügezone 20 der äußeren Teillage 18 in Richtung des äußeren Felgenhorns 9 erstreckt.

In dem sich bildenden umlaufenen Zwickelraum 14 zwischen den im Randbereich gespreizten Teillagen 17, 18 der Radscheibe 16 ist ein profilierter, ringförmiger Stützkern 21 aus PU-Hartschaum angeordnet. Der Stützkern 21 ist passgenau zur Kontur der auseinander laufenden Teillagen 17, 18 ausgebildet. Damit füllt der Stützkern 21 den Zwickelraum 14 formgerecht aus. Am oberen Abschluss stützt der Stützkern 21 die Kontur des Felgenbettes 3 in der Weise, dass sich dennoch eine Sicke 15 herausbildet.

Der ringförmige Stützkern 21 sorgt bei der Herstellung der Verbindung zwischen dem Felgenbett 3 bzw. der Preform des Felgenbettes 3 und der Radscheibe 16 für einen exakten Sitz der an den Teilwerkzeugen angeformten Fügezonen 19, 20. Der Stützkern 21 verbessert die Präzision der Verbindungsnaht 10 zur Verbindung der Radscheibe 16 mit dem Felgenbett 3 und sichert somit die Formfestigkeit der formschlüssigen Hinterschnittverbindung. Der Stützkern 21 erhöht außerdem die Festigkeit dieser Verbindung.

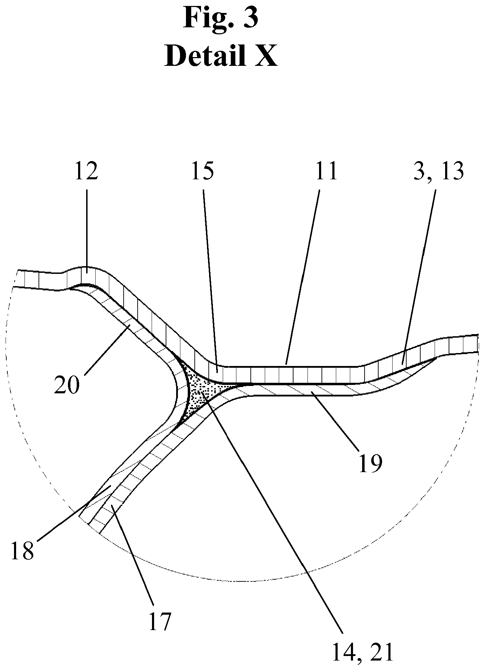

Die umlaufende Verbindungsnaht 10 mit dem Stützkern 21 ist als Detail X gekennzeichnet und in einer vergrößerten Schnittdarstellung nach Fig. 3 gut sichtbar dargestellt.

Nach dem erfindungsgemäßen Verfahren werden in Vorbereitung des Faserablageprozesses zur Herstellung der Preform des Felgenbettes 3 die aus Fasermaterial bestehenden Preformlinge der Teillagen 17, 18 lagenweise aneinander liegend zwischen den hier nicht dargestellten Teilwerkzeugen des Formwerkzeuges angeordnet. Die über die Teilwerkzeuge überstehenden Randbereiche der Preformlinge der Teillagen 17, 18 werden auseinander geklappt und als Fügezonen 19, 20 beidseitig des Formwerkzeuges, jeweils an ein Teilwerkzeug konturengerecht angeformt. Im umlaufenden Randbereich der Radscheibe 16 im Übergang zu den Fügezonen 19, 20 bildet sich zwangsläufig der umlaufende Zwickelraum 14 aus, in welchen der profilierte ringförmige Stützkern 21 eingelegt wird.

Während des Faserablageprozesses zur Herstellung der Preform des Felgenbettes 3 wird an der Verbindungsnaht 10 durch die Form des Stützkernes 21 und der konturierten Fügezonen 19, 20 der Preformlinge der Teillagen 17, 18 eine großflächige Hinterschnittverbindung mit axial als auch radial gesicherten Formenschluss zwischen der Radscheibe 16 und dem Felgenbett 3 ausgebildet.

Bei der Konsolidierung der Preform des Felgenbettes 3 werden zugleich die aneinander liegenden, mit Kleber getränkten Preformlinge der Teillagen 17, 18 der Radscheibe 16 untereinander verklebt und verfestigt. Im Bereich der umlaufenden Verbindungsnaht 10 werden zugleich die Fügezonen 19, 20 verfestigt und mit dem Material des Stützkernes 21 und dem Fasermaterial des Felgenbettes 3 verklebt.

Die schichtweise verbundenen Teillagen 17, 18 aus Kohlenstofffaserverbundwerkstoff erhöhen die Festigkeit der Radscheibe 16 und folglich die Festigkeit der Radfelge 1.2 bei zugleich geringem Gewicht.

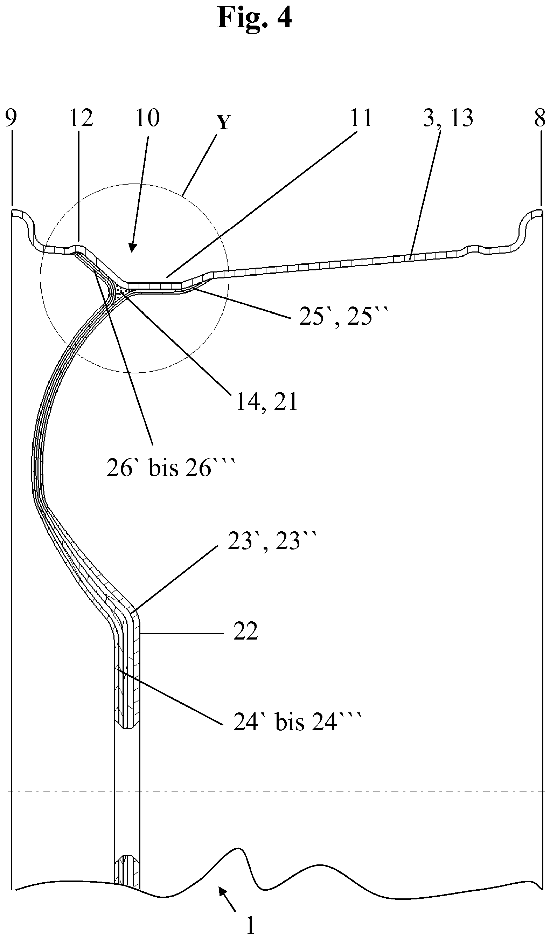

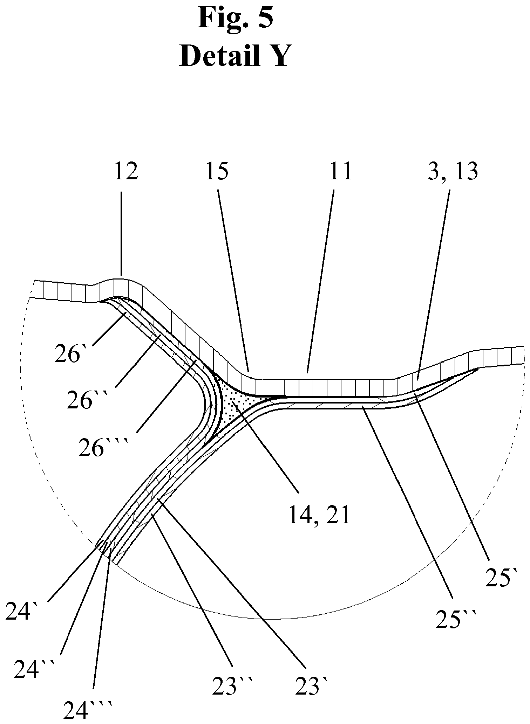

Die Figuren 4 und 5 zeigen eine weitere erfindungsgemäße Radfelge 1.3 nach einem dritten Ausführungsbeispiel, bestehend aus einer fünfteiligen Radscheibe 22 in Verbindung mit dem Felgenbett 3. Gleiche Funktionselemente sind mit identischen Bezugszeichen gekennzeichnet. Nachfolgend soll im Wesentlichen nur auf die Unterschiede zu den Radfelgen 1.1 und 1.2 nach den vorangegangenen Ausführungsbeispielen eingegangen werden. Hinsichtlich der Erläuterung der Verfahrensschritte und Funktionsmerkmale wird ebenfalls auf die vorstehende Beschreibung der Ausführungsbeispiele verwiesen.

In diesem Ausführungsbeispiel besteht die Radscheibe 22 aus insgesamt fünf Teillagen, zwei innere Teillagen 23', 23" und drei äußere Teillagen 24' bis 24"'. Die inneren Teillagen 23', 23" und äußeren Teillagen 24' bis 24"' sind an der umlaufenden Verbindungsnaht 10 zwischen der Radscheibe 22 und dem Felgenbett 3 zueinander gegensinnig aufgefächert angeordnet und weisen jeweils eine Fügezone 25', 25" und 26' bis 26"' auf.

Diese Anordnung an der umlaufenden Verbindungsnaht 10 ist aus dem Detail Y, das in Fig. 5 als vergrößerte Schnittdarstellung gezeigt ist, besonders gut ersichtlich.

Die Teillagen 23', 23" und 24' bis 24"' liegen im hauptsächlich radialen Teil der Radscheibe 22 in fünf Schichten kompakt gebündelt aneinander und sind im Randbereich der Radscheibe aufgeteilt in Bünde von jeweils zwei und drei Teillagen 23', 23" und 24' bis 24"' angeordnet. Die beiden inneren Teillagen 23', 23" sind dabei in Richtung des inneren Felgenhorns 8 und die drei äußeren Teillagen 24' bis 24"' in Richtung des äußeren Felgenhorns 9 ausgerichtet.

Die zugehörigen Fügezonen 25', 25" und 26' bis 26"' der Teillagen 23', 23" und 24' bis 24"' liegen - der Kontur des Felgenbettes 3 folgend - am Tiefbett 11 im Übergang zum Hump 12 des Felgenbettes 3 an, wobei nur jeweils eine Fügezone 25' und 26"' unmittelbar mit dem Felgenbett verbunden ist.

In dem umlaufenden Zwickelraum 14, der sich zwischen den aufgeteilten Teillagen 23', 23" und 24' bis 24"' im Übergang zu den Fügezonen 25' und 26"' bildet, ist analog dem vorhergehenden Ausführungsbeispiel ein passgenau profilierter, ringförmiger Stützkern 21 angeordnet.

Die beiden inneren Teillagen 23', 23" bestehen aus Kohlenstofffaserverbundwerkstoff. Von den drei äußeren Teillagen 24' bis 24"' besteht die zu äußerst gelegene Teillage 24' aus Aluminiumblech, wogegen die Teillagen 24", 24"' ebenfalls aus Kohlenstofffaserverbundwerkstoff bestehen.

Nach dem erfindungsgemäßen Verfahren werden in Vorbereitung des Faserablageprozesses zur Herstellung der Preform des Felgenbettes 3 die aus Fasermaterial bestehenden vier Preformlinge der Teillagen 23', 23", 24", 24"' und die Teillage 24' aus Aluminiumblech lagenweise zwischen den nicht dargestellten Teilwerkzeugen des Formwerkzeuges angeordnet. Die im Randbereich über die Teilwerkzeuge überstehenden Teillagen 23', 23" und 24' bis 24"' werden nach vorstehend beschriebener Aufteilung voneinander gelöst und aufgespreizt und als Fügezonen 25', 25" und 26' bis 26"' beidseitig an die Teilwerkzeug angeformt. Die Aufspreizung und Anformung geschieht u. a. unter Mithilfe des in den Zwickelraum 14 eingelegten Stützkernes 21.

Während des Faserablageprozesses zur Herstellung der Preform des Felgenbettes 3 wird im Bereich des Stützkernes 21 und der angeformten Fügezonen 25', 25" und 26' bis 26"' eine Hinterschnittverbindung ausgebildet. Wie im vorhergehenden Ausführungsbeispiel liefert die großflächige Hinterschnittverbindung neben dem axial und radial gesicherten Formenschluss eine besonders große Kontaktfläche für die nachfolgende stoffschlüssige Verbindung zwischen der Radscheibe 22 und dem Felgenbett 3.

Die die aneinander liegenden, mit Kleber getränkten Preformlinge der Teillagen 23', 23", 24", 24"' der Radscheibe 22 werden während der Konsolidierung der Preform des Felgenbettes 3 untereinander verklebt und verfestigt. Zugleich wird die äußere Teillage 24' aus Aluminiumblech durch Verklebung mit der Teillage 24" verbunden. Im Bereich der umlaufenden Verbindungsnaht 10 werden die Fügezonen 25', 25" und 26", 26"' der Teillagen 23', 23" und 24", 24"' verfestigt und untereinander verklebt sowie fest mit dem Material des Stützkernes 21 und dem Fasermaterial des Felgenbettes 3 verklebt.

Die Teillagen 23', 23", 24", 24"' aus Kohlenstofffaserverbundwerkstoff gewährleisten durch die mehrfachen, schichtweisen Verklebungen bei zugleich geringem Gewicht eine besonderes hohe die Festigkeit der Radscheibe 22 und folglich der Radfelge 1.3.

Außerdem bildet die Teillage 24' aus Aluminiumblech eine äußere Schutzschicht der Radscheibe 22, indem sie insbesondere die benachbarte Teillage 24" aus Kohlenstofffaserverbundwerkstoff vor mechanischen Einwirkungen von außen, wie z.B. durch Steinschlag, schützt.

### Bezugszeichenliste

- 1: Radfelge .1, .2, .3
- 2: Radscheibe
- 3: Felgenbett
- 4: innere Teillage des Randbereiches der Radscheibe
- 5: äußere Teillage des Randbereiches der Radscheibe
- 6: Fügezone der inneren Teillage
- 7: Fügezone der äußeren Teillage
- 8: inneres Felgenhorn
- 9: äußeres Felgenhorn
- 10: Verbindungsnaht
- 11: Tiefbett des Felgenbettes
- 12: Hump des Felgenbettes
- 13: Flachbett des Felgenbetts
- 14: Zwickelraum
- 15: Sicke
- 16: zweiteilige Radscheibe
- 17: innere Teillage der zweiteiligen Radscheibe
- 18: äußere Teillage der zweiteiligen Radscheibe
- 19: Fügezone der inneren Teillage
- 20: Fügezone der äußeren Teillage
- 21: profilierter Stützkern, ringförmiger Stützkern
- 22: fünfteilige Radscheibe
- 23: innere Teillage der fünfteiligen Radscheibe ' bis "
- 24: äußere Teillage der fünfteiligen Radscheibe " bis "'
- 25: Fügezone der inneren Teillage ' bis "
- 26: Fügezone der äußeren Teillage ' bis "'

## Patentansprüche

1. Radfelge mit einem Felgenbett aus Faserverbundwerkstoff und einer Radscheibe, wobei die Radscheibe an ihrem radialen Randbereich mit dem Felgenbett verbunden ist, **dadurch gekennzeichnet, dass** der Randbereich der Radscheibe (2) wenigstens zwei gegensinnig aufgespreizt angeordnete Teillagen (4, 5) aufweist, an denen jeweils eine im Wesentlichen axial erstreckte, konturierte Fügezone (6, 7) ausgebildet ist, welche flächig mit dem Felgenbett (3) verbunden ist.

2. Radfelge(1) mit einem Felgenbett (3) aus Faserverbundwerkstoff und einer Radscheibe(16, 22), wobei die Radscheibe (16, 22) an ihrem radialen Randbereich mit einem axial begrenzten Bereich des Felgenbetts (3) verbunden ist, **dadurch gekennzeichnet, dass** die Radscheibe (16, 22) aus wenigstens zwei, bereichsweise aneinander liegend angeordneten Teillagen (17, 18, 23, 24) besteht, an denen im Randbereich der Radscheibe (16, 22) jeweils eine im Wesentlichen axial erstreckte, konturierte Fügezone (19, 20, 25, 26) ausgebildet ist, welche flächig mit dem Felgenbett (3) verbunden ist.

3. Radfelge nach Anspruch 1 oder 2, **dadurch gekennzeichnet, dass** die Teillagen (4, 5, 17, 18, 23, 24) zumindest abschnittsweise miteinander stoffschlüssig verbunden sind.

4. Radfelge nach einem der Ansprüche 1 bis 3, **dadurch gekennzeichnet, dass** die Fügezone (6, 7, 19, 20, 25, 26) der Teillage (4, 5, 17, 18, 23, 24) in Umfangsrichtung der Radscheibe (2, 16, 22) unterbrochen ausgebildet ist.

5. Radfelge nach einem der Ansprüche 1 bis 4, **dadurch gekennzeichnet, dass** zwischen den Fügezonen (6, 7, 19, 20, 25, 26) zweier Teillagen (4, 5, 17, 18, 23, 24) ein profilierter Stützkern (21) angeordnet ist.

6. Radfelge nach einem der Ansprüche 1 bis 5, **dadurch gekennzeichnet, dass** zumindest eine Teillage (4, 5, 17, 18, 23, 24) der Radscheibe (2, 16, 22) aus Faserverbundwerkstoff, Stahlblech oder Aluminiumblech besteht.

7. Radfelge nach Anspruch 6, **dadurch gekennzeichnet, dass** eine Teillage (4, 5, 17, 18, 23, 24) aus Faserverbundwerkstoff aus mehreren Textilfaserlagen gebildet ist.

8. Verfahren zur Herstellung einer Radfelge nach einem der Ansprüche 1 bis 7, bei dem in einer Vorfertigungsphase zur Bildung einer Preform des Felgenbetts (3) durch Faserablage auf einem das Felgenbett (3) abbildenden Formwerkzeug
- die Radscheibe (2, 16, 22) bzw. die Teillagen (4, 5, 17, 18, 23, 24) der Radscheibe (2, 16, 22) zwischen zwei Teilwerkzeugen des Formwerkzeuges angeordnet wird bzw. angeordnet werden,
- die über die Teilwerkzeuge überragende Abschnitte der Teillagen (4, 5, 17, 18, 23, 24) an die Teilwerkzeuge angeformt werden, wobei die angeformten Abschnitte der Teillagen (4, 5, 17, 18, 23, 24) im Wesentlichen axial erstreckte, konturierte Fügezonen (6, 7, 19, 20, 25, 26) bilden,
- welche durch anschließende Ablage des Fasermaterials formschlüssig an der Preform des Felgenbettes (3) fixiert werden.

9. Verfahren nach Anspruch 8, **dadurch gekennzeichnet, dass** vor dem Faserablageprozess in einem Zwickelraum (14) zwischen den an die Teilwerkzeuge angeformten Teillagen (4, 5, 17, 18, 23, 24) ein profilierter Stützkern (21) eingelegt wird.

10. Verfahren nach Anspruch 8 oder 9, **dadurch gekennzeichnet, dass** zwischen den Teilwerkzeugen des Formwerkzeuges ein aus Fasermaterial vorgefertigter Preformling der Radscheibe (2, 16, 22) oder wenigstens ein aus Fasermaterial vorgefertigter Preformling der Teillage (4, 5, 17, 18, 23, 24) der Radscheibe angeordnet wird.

## Claims

1. Wheel rim with a rim base made of fibre-reinforced composite and a wheel disc, where the wheel disc at its radial edge region is joined to the rim base, **characterised in that** the edge region of the wheel disc (2) has at least two partial layers (4, 5) arranged spread apart in opposite directions, on which in each case an essentially axially extending, contoured joining zone (6, 7) is formed, which is joined flat with the rim base (3).

2. Wheel rim (1) with a rim base (3) made of fibre-reinforced composite and a wheel disc (16, 22), where the wheel disc (16, 22) at its radial edge region is joined to an axially limited region of the rim base (3), **characterised in that** the wheel disc (16, 22) consists of at least two partial layers (17, 18, 23, 24), regions of which are arranged against each other, on which in the edge region of the wheel disc (16, 22) in each case an essentially axially extending, contoured joining zone (19, 20, 25, 26) is formed, which is joined flat with the rim base (3).

3. Wheel rim according to claim 1 or 2, **characterised in that** at least sections of the partial layers (4, 5, 17, 18, 23, 24) are joined to each other by a material bond.

4. Wheel rim according to one of claims 1 to 3, **characterised in that** the joining zone (6, 7, 19, 20, 25, 26) of the partial layer (4, 5, 17, 18, 23, 24) is formed discontinuously in the circumferential direction of the wheel disc (2, 16, 22).

5. Wheel rim according to one of claims 1 to 4, **characterised in that** between the joining zones (6, 7, 19, 20, 25, 26) of two partial layers (4, 5, 17, 18, 23, 24) a profiled support core (21) is arranged.

6. Wheel rim according to one of claims 1 to 5, **characterised in that** at least one partial layer (4, 5, 17, 18, 23, 24) of the wheel disc (2, 16, 22) is made of fibre-reinforced composite, sheet steel or sheet aluminium.

7. Wheel rim according to claim 6, **characterised in that** a partial layer (4, 5, 17, 18, 23, 24) made of fibre-reinforced composite is formed from several textile fibre layers.

8. Method of manufacturing a wheel rim according to one of claims 1 to 7, in which during a prefabrication phase for forming a preform of the rim base (3) by placing fibres on a forming tool representing the rim base (3)
- the wheel disc (2, 16, 22) is or the partial layers (4, 5, 17, 18, 23, 24) of the wheel disc (2, 16, 22) are arranged between two partial tools of the forming tool,
- the sections of the partial layers (4, 5, 17, 18, 23, 24) projecting beyond the partial tools are moulded onto the partial tools, where the moulded-on sections of the partial layers (4, 5, 17, 18, 23, 24) form essentially axially extending, contoured joining zones (6, 7, 19, 20, 25, 26),
- which are fixed form-fittingly to the preform of the rim base (3) by subsequent placement of fibre material.

9. Method according to claim 8, **characterised in that** before the fibre placement process, a profiled support core (21) is inserted into a space (14) between the partial layers (4, 5, 17, 18, 23, 24) moulded onto the partial tools.

10. Method according to claim 8 or 9, **characterised in that** a preform, prefabricated from fibre material, of the wheel disc (2, 16, 22) or at least a preform, prefabricated from fibre material, of the partial layer (4, 5, 17, 18, 23, 24) of the wheel disc is arranged between the partial tools of the forming tool.

## Revendications

1. Jante avec fond en matière composite fibreuse et avec disque de roue, sachant que le disque de roue est relié sur sa zone marginale radiale avec le fond de jante, **caractérisée en ce que** la zone marginale du disque de roue (2) présente au moins deux couches partielles disposées en évasement de sens opposés (4, 5), couches contre lesquelles est configurée respectivement une zone d'assemblage (6, 7) profilée s'étendant essentiellement dans le sens axial et qui est reliée par sa surface avec le fond (3) de jante.

2. Jante (1) avec fond (3) de jante en matière composite fibreuse et avec disque de roue (16, 22), sachant que le disque de roue (16, 22) est relié sur sa zone marginale radiale avec une zone axialement limitée du fond (3) de jante, **caractérisée en ce que** le disque de roue (16, 22) se compose d'au moins deux couches partielles (17, 18, 23, 24) disposées localement en applique réciproque, couches contre lesquelles, dans la zone marginale du disque de roue (16, 22) est configurée respectivement une zone d'assemblage profilée (19, 20, 25, 26) s'étendant essentiellement dans le sens axial, zone qui est reliée par sa surface avec le fond de jante (3).

3. Jante selon la revendication 1 ou 2, **caractérisée en ce que** les couches partielles (4, 5, 17, 18, 23, 24) sont réciproquement reliées, au moins de façon segmentée, par adhérence de matières.

4. Jante selon l'une des revendications 1 à 3, **caractérisée en ce que** la zone d'assemblage (6, 7, 19, 20, 25, 26) de la couche partielle (4, 5, 17, 18, 23, 24) est configurée interrompue dans le sens circonférentiel du disque de roue (2, 16, 22).

5. Jante selon l'une des revendications 1 à 4, **caractérisée en ce qu'**entre les zones d'assemblage (6, 7, 19, 20, 25, 26) de deux couches partielles (4, 5, 17, 18, 23, 24) est disposé un noyau d'appui profilé (21).

6. Jante selon l'une des revendications 1 à 5, **caractérisée en ce qu'**au moins une zone partielle (4, 5, 17, 18, 23, 24) du disque de roue (2, 16, 22) se compose de matière composite fibreuse, de tôle d'acier ou de tôle d'aluminium.

7. Jante selon la revendication 6, **caractérisée en ce qu'**une couche partielle (4, 5, 17, 18, 23, 24) en matière composite fibreuse est formée à l'aide de plusieurs couches de fibres textiles.

8. Procédé de fabrication d'une jante selon l'une des revendications 1 à 7, dans lequel au cours d'une phase de préfabrication pour générer une préforme du fond de jante (3) en déposant de la fibre sur un outil de moulage reproduisant le fond de jante (3)
- le disque de roue (2, 16, 22) et les couches partielles (4, 5, 17, 18, 23, 24) du disque de roue (2, 16, 22) est et sont disposé(e)s entre deux moules partiels de l'outil de moulage,
- les segments des couches partielles (4, 5, 17, 18, 23, 24) dépassant des moules partiels sont moulés contre les moules partiels, sachant que les segments moulés des couches partielles (4, 5, 17, 18, 23, 24) forment essentiellement des zones d'assemblage profilées s'étendant axialement (6, 7, 19, 20, 25, 26),
- zones qui du fait de la déposition subséquente du matériau fibreux sont fixées par adhérence de formes contre la préforme du fond de jante (3).

9. Procédé selon la revendication 8, **caractérisé en ce qu'**avant le processus de déposition de la fibre, un noyau d'appui profilé (21) est introduit dans un espace cunéiforme (14) entre les couches partielles moulées contre les moules partiels (4, 5, 17, 18, 23, 24).

10. Procédé selon la revendication 8 ou 9, **caractérisé en ce qu'**entre les moules partiels de l'outil de moulage est disposée une ébauche préformée du disque de roue (2, 16, 22) préfabriquée en matériau fibreux, ou au moins une ébauche préformée, préfabriquée en matériau fibreux, de la couche partielle (4, 5, 17, 18, 23, 24) du disque de roue.
